# EUROPEAN PATENT APPLICATION

(11) **EP 1 684 281 A1**
(43) Date of publication of application: **26.07.2006**
(21) Application number: 04799416.5
(22) Date of filing: 01.11.2004
(51) Int. Cl.: G11B 7/24, G11B 7/004

(54) **OPTICAL INFORMATION RECORDING MEDIUM, OPTICAL INFORMATION RECORDING MEDIUM RECORDING/REPRODUCING METHOD, AND RECORDING/REPRODUCING APPARATUS**

(30) Priority: 07.11.2003 JP 2003378262
(71) Applicant: MATSUSHITA ELECTRIC INDUSTRIAL CO., LTD., Kadoma-shi, Osaka 571-8501 (JP)
(72) Inventor: NISHIKIORI, Keiji, // (JP); OHNO, Eiji, // (JP); HINO, Yasumori, // (JP)
(74) Representative: Eisenführ, Günther
(86) International application number: PCT/JP2004/016210
(87) International publication number: WO 2005/045818

(57) **Abstract**

When the recording density of an optical information recording medium is increased, the disk structure becomes more complex; and when many recording layers are provided, the production margin and the production cost becomes problems. By using a substrate and a light-transmitting layer formed on the substrate and made of a material the light transmittance of which varies when irradiated with recording light, information can be recorded/reproduced, thereby realizing easy production of a high-density optical information recording medium at low cost.

## Description

### TECHNICAL FIELD

The present invention relates to an optical information recording medium for recording and reproducing information, and a recording and reproduction method and a recording and reproduction apparatus for optical information recording media.

### BACKGROUND ART

In recent years, studies on various types of optical information recording have been conducted in the filed of information recording.

The optical information recording enables density increasing, and also noncontact recording and reproduction. As a method for realizing noncontact recording and reproduction at an inexpensive cost, the optical information recording is about to achieve applications in a wide variety of use.

Particularly, digital versatile discs (DVD) are high capacity optical discs with which recording and reproduction of not only sound but also moving pictures such as movies as information can be performed. The DVDs have spread in the market rapidly.

Currently, optical discs, typically DVDs, have a structure in which an information recording layer is provided on a transparent resin substrate having a thickness of 1.2 mm and an overcoat is provided for protecting the information recording layer, or a structure in which information recording layers are provided respectively on one side or both sides of two transparent resin substrates of 1.2 mm, and the two substrates are attached to each other.

Recently, for increasing the density, optical discs used with a laser of a short wavelength and an objective lens with a large numerical aperture (NA) have been proposed (for example, Japanese Laid-Open Publication Nos. 8-235638 and 10-283683).

Recorded marks of the optical discs are proportional to the size of optical spot. As the optical spot size decreases, the recorded marks can be recorded and reproduced in a smaller area and the density can be increased. The optical spot size is determined by λ/NA when λ is a wavelength of irradiation laser light. In other words, for increasing the density, NA should be increased.

However, NA has an important connection with a tilt of discs. As NA increases, a margin for a tilt of a disc becomes smaller. The margin can be widened by reducing the thickness of a light transmitting layer. As a method for reducing the thickness of the light transmitting layer, a method of attaching a resin film formed by a casting method to an information recording layer with an UV adhesive or an acryl gluing agent has been proposed.

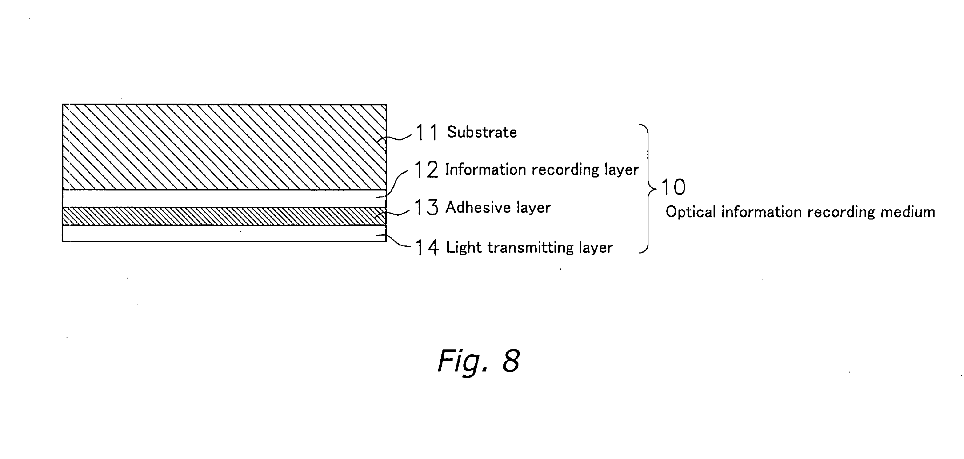

Figure 8 is a diagram showing a structure of a conventional optical information recording medium 10. The optical information recording medium 10 includes a substrate 11 with grooves for recording information being formed thereon and an information recording layer 12 formed on the grooves. An adhesive layer 13 adheres the information recording layer 12 to a light transmitting layer 14 formed of a resin film. For example, if the information recording layer 12 is made to be recordable for only once, the produced medium is a write once recording medium. Such a write once recording medium is realized by modifying reflectance of the information recording layer 12 with laser light. Tilt margin is increased to achieve high density recording by reducing the thickness of the light transmitting layer 14.

In recent years, in view of security issues, individual identification information is recorded on each of optical information recording media (see, for example, Japanese Laid-Open Publication No. 11-162031). For postscribing individual information such as media ID on an optical information recording medium, a stripe row of a bar code type which is called burst cutting area (BCA) is postscribed in an area between 22.3 to 23.5 mm from an inner periphery of the disc in a radial direction (in the case of DVD standard) with a laser of a high power. Thus, the information recording layer 12 is destroyed and disc ID or the like is recorded. The BCA can also be applied to discs having an aluminum disc as a reflective film such as ROM discs of DVDs, and various applications have been proposed. The capacity is 188 bytes which is significantly smaller than that of the recorded data. Even when a gap between stripes is 10 µm or longer, it can be accommodated in one circle of the disc. Even though its capacity is small, the individual information to be postscribed with the BCA is important information when in use. Thus, it has to be resistant to unauthorized alteration.

### DISCLOSURE OF THE INVENTION

Usually, for realizing write once recording, a recording layer for write once recording has to be provided. Such a recording layer may be formed of a phase change material, or an organic dye.

When a phase change material is used, the recording layer is formed by laminating a reflective film, a protection film, a phase change film or the like by a sputtering method. This method has following problems:
(1) Fabrication is difficult since the recording layer has a multilayer structure; and
(2) The cost for a film forming device and materials increases.

When organic dyes are used, the organic dyes are applied on a disc by a spin coat method, and then a reflective film is formed by a sputtering method. This method has following problems:
(1) A film thickness is difficult to be controlled in the spin coat method; and
(2) The cost for materials is high.

The BCA stripe is intended to be read in a tracking-off state. In view of error margins of optical heads and optical disc apparatus mechanisms, the length of the BCA stripe cannot be reduced. Therefore, for recording the individual information with the BCA stripe, a large proportion of a recordable area has to be allocated for recording the BCA stripe. Thus, an area which can be used for recording decreases. Particularly, in a recording film which can be recorded with a high density, a recording capacity significantly decreases.

The present invention is proposed in view of such conventional problems, and an object thereof is to provide an optical information recording medium and a recording and reproduction method with a low cost and a high density.

An optical information recording medium according to the present invention for solving the above-described problems comprises a substrate and a light transmitting layer formed on the substrate, and wherein transmittance of the light transmitting layer is changed upon irradiation of recording light.

Thus, information can be recorded and reproduced without providing a conventional information recording layer. Media can be produced easily with a low cost.

An optical information recording medium according to the present invention preferably comprises a light absorption layer between the substrate and the light transmitting layer. Since recording light with a power higher than that of conventional one is necessary, it is required to absorb the heat.

In an optical information recording medium according to the present invention, the change in the transmittance of the light transmitting layer caused by irradiation of recording light is an irreversible change, and in a direction to reduce transmission of reproduction light or recording and reproduction light. Thus, the medium becomes suitable for write once recording.

In an optical information recording medium according to the present invention, a material of the light transmitting layer preferably includes a resin sheet formed of a polycarbonate resin, an acryl resin, or a polyolefin resin.

Further, it is preferable that the light transmitting layer further includes an adhesive resin for adhering the resin sheet to the substrate. In this case, a material which causes the transmittance to be reduced by recording light may be selected as the adhesive resin.

Moreover, it is preferable that a material of the adhesive resin is formed of a UV curable resin or an acryl gluing agent.

Further, it is preferable that the light transmitting layer is formed of one or more layers of a UV curable resin. In this case, an optical information recording medium with a low cost and a high density can be produced easily.

Furthermore, in an optical information recording medium according to the present invention, at least one transmittance-changed area of the light transmitting layer is formed in an area other than a user data area, and the transmittance changed area is formed on an inner side or outer side of the user data area, or both the inner and outer sides. This allows the optical information recording medium to be ready for recording of a BCA area.

In a recording and reproduction method for an optical information recording medium according to the present invention for solving the above-described problems, the light transmitting layer is irradiated with modulated recording light from above and transmittance of the light transmitting layer is changed to record information, and information is reproduced based on the change in the transmittance. Further, the transmittance of the light transmitting layer is changed irreversibly to record information, and at least one transmittance-changed area of the light transmitting layer is formed in an area other than a user data area. Thus, information can be recorded and reproduced without providing a recording layer, and the cost can be reduced.

In a recording and reproduction apparatus for an optical information recording medium according to the present invention for solving the above-described problems, the light transmitting layer is irradiated with modulated recording light from above and transmittance of the light transmitting layer is changed to record information, and information is reproduced based on the change in the transmittance.

A recording and reproduction apparatus for an optical information recording medium according to the present invention is used for an optical information recording medium having a substrate, a first recording area including an information recording layer, and a second recording area including a light transmitting layer, and comprises: light irradiation unit operable to irradiate the first recording area and the second recording area with recording light; and switching unit operable to switch a recording mode of the light irradiation unit between the first recording area and the second recording area. Thus, information can be recorded and reproduced on and from an optical information recording medium having a plurality of recording areas with one device, and the cost can be reduced.

As described above, according to an optical information recording medium of the present invention, information can be recorded and reproduced without an information recording layer. Thus, medium with a low cost and a high density can be produced easily on a mass production base.

### BRIEF DESCRIPTION OF THE DRAWINGS

Figure 1 is a diagram showing a structure of an optical information recording medium according to the present invention.
Figure 2 is a diagram for evaluating a signal of an optical information recording medium according to the present invention.
Figure 3(a) is a schematic diagram showing a disc ID of an optical information recording medium according to the present invention; and Figure 3(b) is a diagram for evaluating a signal of the optical information recording medium according to the present invention.
Figure 4 is a schematic diagram showing a disc ID of an optical information recording medium according to the present invention.
Figure 5 is a schematic diagram showing a recording method for an optical information recording medium according to the present invention.
Figure 6 is a schematic diagram showing a recording method for a disc ID of an optical information recording medium according to the present invention.
Figure 7 is a diagram showing a structure of an optical information recording medium according to a variation of the present invention.
Figure 8 is a diagram showing a structure of a conventional optical information recording medium.

### EXPLANATION OF REFERENCES

10 Optical information recording medium
11 Substrate
12 Information recording layer
13 Adhesive layer
14 Light transmitting layer
20 Optical information recording medium
21 Substrate
22 Light absorption layer
23 Light transmitting layer
41,51 User data area
42,52 Area for data other than user data
43 Recorded data
50 Optical information recording medium
61 Optical information recording medium
62 Optical pickup
63 Motor
64 Driving section
65 Drive controller
66 Pickup control section
67 Signal processing section
68 Write information
71 Optical information recording medium
72 Optical pickup
73 Motor
74 Driving section
75 Drive controller
76 Pickup control section
77 Signal processing section
78 Write information
79 Disc ID signal processing section
80 Disc ID write information

### BEST MODE FOR CARRYING OUT THE INVENTION

An optical information recording medium according to the present invention includes a light transmitting layer on a substrate. Information is recorded by utilizing a change in transmittance of the light transmitting layer caused by irradiation of recording light. Information can be recorded and reproduced without an information recording layer which has been conventionally provided. Thus, media can be produced easily with a low cost. The light transmitting layer is formed of a cover layer (sheet) and an adhesive layer formed of an adhesive resin. The transmittance is changed in the adhesive layer part.

The method for recording information by reducing the transmittance of the light transmitting layer is particularly suitable for an area for recording data other than user data (for example, identification information of the medium). However, the method can also be applied to an area for recording user data.

The optical information recording medium of the present invention may include a light absorption layer between the substrate and the light transmitting layer. The light absorption layer may also serve the role as a conventional reflective film, and absorbs heat generated by use of recording light which has a power higher than that of conventional one to reduce an influence of extra heat.

Hereinafter, embodiments of the present invention will be described with reference to the drawings.

### [Embodiment 1]

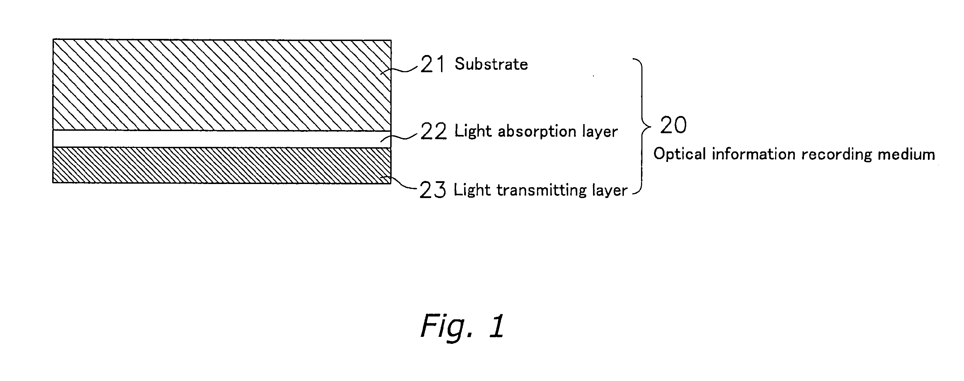

Figure 1 shows an optical information recording medium 20 as an embodiment of the present invention. In the optical information recording medium 20, write once recording is performed by changing transmittance of a light transmitting layer. Therefore, the optical information recording medium 20 does not include a conventional information recording layer.

The optical information recording medium 20 includes a light absorption layer 22 provided across a surface of a substrate 21. On the substrate 21, grooves or pits, or both grooves and pits are formed. The optical information recording medium 20 further includes a light transmitting layer 23 provided across a surface of the light absorption layer 22.

For producing the substrate 21, injection molding of a polycarbonate resin is performed to obtain a polycarbonate substrate having a diameter of 120 mm and a center hole diameter of 15 mm and having a groove of a spiral pattern. The light absorption layer 22 is produced on the substrate 21 with a sputtering device so as to have a thickness of 20 nm. Then, the light transmitting layer 23 having a thickness of 100 µm is formed to be ready for high density recording using a lens with high NA. The light transmitting layer 23 is formed by adhering a sheet formed of a polycarbonate resin material having a thickness of 75 µm on the formed light absorption layer 22 using a resin adhesive of polyacrylate group as an adhesive layer of 25 µm thick.

The adhesive used in above process is an adhesive formed of a cross-linked material of acrylate copolymers and a photocurable component. Herein, the acrylate copolymer refers to a copolymer including acrylate derivatives as a main component, and other monomers may be copolymerized. For example, acrylate may be methyl acrylate, or a methyl group of the methyl acrylate may be changed to an ethyl group, butyl group, isobutyl group or the like, or they may be combined to produce the acrylate. The other monomers to be copolymeralized with the acrylate may be, for example, an acrylic acid, a crotonic acid, a maleic acid, an acrylonitrile, vinyl acetate, or the like. A curable component of the adhesive may be oligomers or monomers which includes an unsaturated group within a molecular and in which an average molecular weight is 20,000 or lower when ultraviolet curing occurs. For example, acrylate-based materials , particularly, trimethylol propane triacrylate, polyurethane acrylate, polyester acrylate, polyether acrylate, epoxy acrylate, and the like may be used. In the optical information recording medium 20, an adhesive employing methyl acrylate and trimethylol propane triacrylate is used.

### (Example 1)

An experiment for confirming that information can be recorded by changing the transmittance of the light transmitting layer with irradiation of recording light was conducted using the optical information recording medium 20.

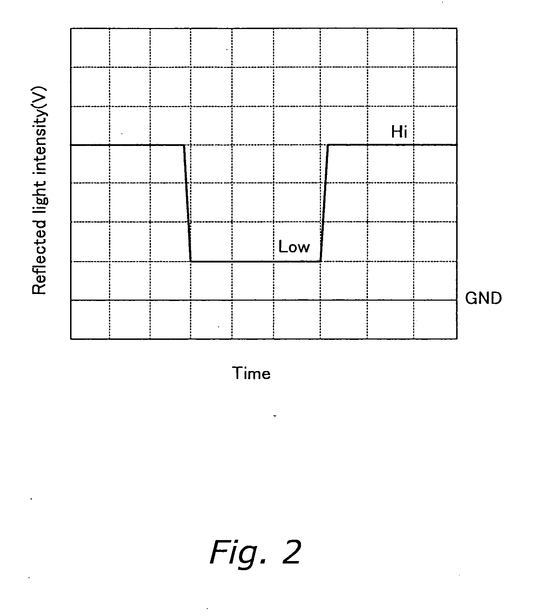

For confirming a recording operation easily, a region where the light of a recording laser does not impinge was intentionally produced in the optical information recording medium 20 by using a metal mask for shielding light. Then, the optical information recording medium 20 was irradiated entirely with recording UV light having a wavelength of 250 nm. Then, reproduction was performed using a laser of a wavelength of 405 nm. Figure 2 shows a result of measurement of differences in the reflected light intensity by using an oscilloscope. When the optical information recording medium 20 was irradiated with the recording UV light, a change was observed between the masked region and the region which is not shielded from light. This is due to a difference in the transmittance of the light transmitting layer 23. The present invention can be realized when the change in the transmittance is about 2 % or higher. In the region which is not shielded, the reflected light intensity of the reproduction laser light decreased compared to that of the masked region. The reflected light intensity of the region which is not shielded is Low in the figure and that of the masked region is High in the figure.

The change in the transmittance was caused by a thermal damage applied to the light transmitting layer 23 in the region which is not shielded. Particularly, the thermal damage was high because heat from the recording light was absorbed by the light absorption layer 22. It can be assumed that the cross-linked molecules are cleaved in the region which is not shielded. Specifically, cross-linkage between functional groups such as carboxyl groups, hydroxyl groups or the like in the acrylate copolymer which is a component of the resin adhesive of the light transmitting layer 23 and unsaturated groups (for example, acrylyl groups) are cleaved by the laser light, and the transmittance changes.

In this way, information can be recorded on an optical information recording medium without employing a special layer for storing recorded information as in the conventional optical information recording medium 10.

### (Example 2)

An experiment was conducted for confirming whether the change in the transmittance in the optical information recording medium 20 of the present invention with the information being recorded as described with reference to Figure 2 is irreversible. In this test, conditions for media No. 1 through 3 were set based on an Arrhenius plot such that the optical information recording media 20 have the same change as they will have when about 10 to 20 years passed. The media No. 1 through 3 were left under environment of 90°C and 80% for 100 hours.

**(Table 1)**

| | Before Weatherability Test | | After Weatherability Test | |
|---|---|---|---|---|
| Media No. | Reflectance Hi (%) | Reflectance Low (%) | Reflectance Hi (%) | Reflectance Low (%) |
| 1 | 20 | 2.1 | 19 | 2.0 |
| 2 | 19.5 | 2.0 | 19 | 1.9 |
| 3 | 19.8 | 2.2 | 19.2 | 2.0 |

Table 1 shows changes in the reflectance of the media 20 before and after the weatherability test. The reflectance Hi represents the reflectance of the area where the reflectance is not changed as shown in Figure 2, and the reflectance Low represents the reflectance of the area where the reflectance is changed. As can be seen from Table 1, the values of Hi and Low of the media experienced substantially no change before and after the test. Thus, the decrease in the transmittance of the light transmitting layer 23 is an irreversible change, and write once recording can be achieved.

In this embodiment, the recording UV light is used for recording. However, it is difficult to record fine information with the UV light using a mask. Therefore, the above embodiment is suitable for recording information in the size of about few µm.

### [Embodiment 2]

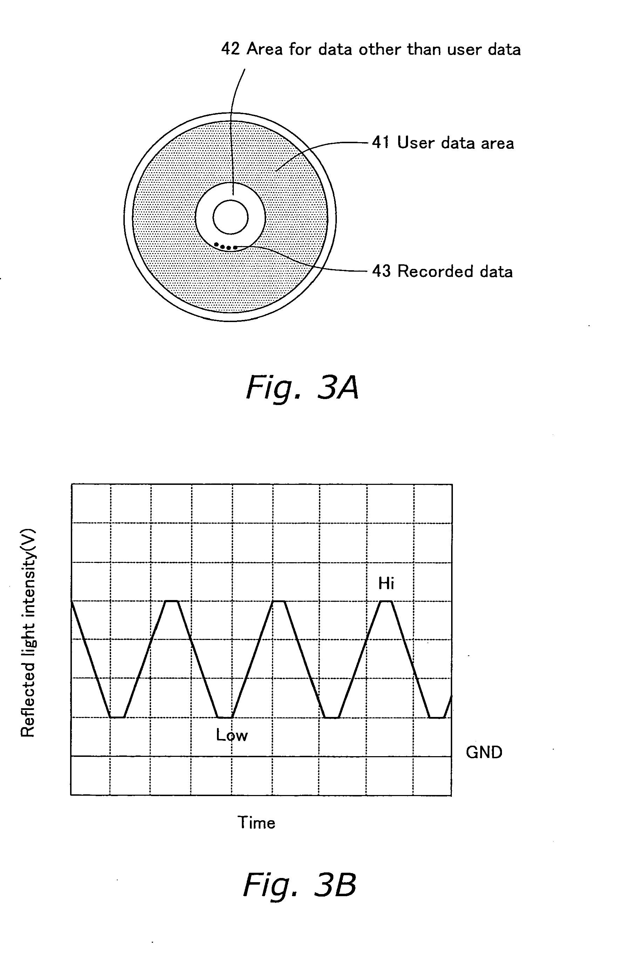

Figures 3(a) and 3(b) show a result of recording fine marks on the optical information recording medium 20 without any mask. Figure 3(a) schematically shows the optical information recording media 20 with data being recorded. On an inner peripheral side of a user data area 41, an area 42 for recording data other than user data (for example, individual information) is provided. In the figure, recorded data 43 formed of marks is recorded in the area 42. As the light transmitting layer 23, a polycarbonate sheet and a resin adhesive of polyacrylate group are used. Functional groups and degree of polymerization of the acrylate are modified such that, in view of wavelength dependency of the transmittance of the resin adhesive of polyacrylate group, the transmittance suddenly drops around 400 nm. Figure 3(b) shows a waveform of an oscilloscope when the recorded data 43 having a mark length of 5 um is recorded on the optical information recording medium 20 using a recording laser wavelength of 405 nm under the recording conditions of linear speed of 0.5 m/s and a recording power of 10 mW, and then, the recorded data 43 is reproduced with the linear speed of 5 m/s and reproduction power of 0.3 mW. It can be seen from the waveform that the same laser light can be used for both recording and reproduction. A carrier and noise ratio C/N is 60 dB. A sufficient signal can be obtained.

The recorded data formed of marks can be recorded and reproduced similarly on the user data area 41.

In the present embodiment, the material of the light transmitting layer 23 is a combination of the polycarbonate sheet and a resin adhesive of polyacrylate group. However, the material is not limited to such a combination. Combinations including an acryl-based resin sheet or a polyolefin-based resin sheet instead of the polycarbonate sheet can achieve the similar results.

Also, the adhesive is not limited to the one of polyacrylate group. A UV curable resin or an adhesive including a UV curable resin can achieve the similar results.

### [Embodiment 3]

When the light transmitting layer 23 is produced by a spin coat method using a UV resin so as to have a film thickness of 100 µm, similar effects can be achieved except that the modification rate obtained as shown in Figure 3(b) decreases slightly. This is because the film thickness of the UV resin is stable with respect to the heat, and thus, the change in the transmittance becomes smaller than that in the light transmitting layer 23 formed of a sheet and an adhesive.

The same result can be obtained when a hard coat layer formed of a UV resin is formed on the UV resin.

### [Embodiment 4]

According to the present invention, recording and reproduction can be established by the light transmitting layer 23. Thus, by just providing the light transmitting layer 23 on a conventional optical information recording medium 10, write once recording and rewritable recording become possible. Herein, the conventional optical information recording medium has a structure including an information recording layer formed of a phase change recording layer and the like in the user data area. Media ID and other types of information specific to manufacturer are to be write-once recorded by changing the transmittance of the light transmitting layer 23 in the area other than the user data area. In this embodiment, the light absorption layer is provided to prepare for recording light with a high power in the present invention, but it also serves a role of a conventional reflective film.

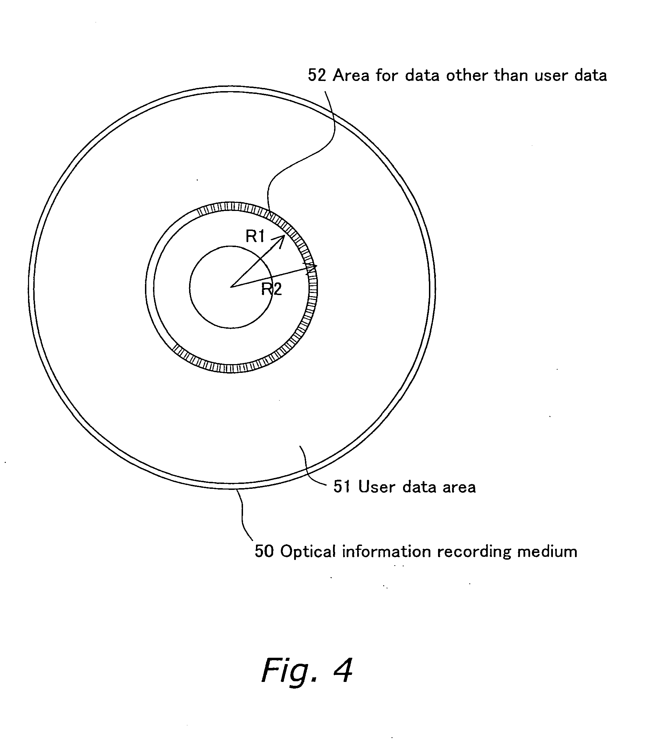

Figure 4 shows a schematic view of areas of an optical information recording medium 50 according to the present embodiment. The optical information recording medium 50 includes a user data area 51 and an area 52 for recording data other than the user data. The user data area 51 includes an information recording layer and a light transmitting layer. The area 52 is a space between R1 and R2 of the optical information recording medium 50 and includes at least a light transmitting layer formed therein. Recording conditions of the recording laser light for recording information on the area 52 are a linear speed of 1 m/s, a bottom power of 0.1 mW and a bias power of 2 mW The peak power for recording is 11 mW By employing such large power, the transmittance of the light transmitting layer is changed. Recording information on the user data area 51 is performed at the linear speed of 5 m/s, the bottom power of 0.3 mW, the bias power of 3 mW, and the recording peak power of 6.2 mW Thus, there is a phase change in the phase change recording layer, but the transmittance does not change in the light transmitting layer. The recording conditions for the areas are rendered different by switching a mode of the recording and reproduction apparatus for each of the areas.

The recording information is assumed to be individual information. The individual information is a set of information unique to or substantially unique to each of the discs, and basic information common among the optical discs. Herein, the disc ID is described as typical individual information. The disc ID is used with other key information in order to protect copyrights of video, audio, data and the like recorded on optical discs. For example, it is used for encryption recording a work which is allowed to be copied for only once differently for each of the optical discs based on disc IDs and the like.

According to the present invention, the optical information recording medium 20 can be recorded by using normal recording laser light with only the recording conditions being changed. Unlike the conventional write once recording, this allows the optical information recording medium 20 to have a higher density. Thus, if the data amount is the same, an area to be occupied can be small. Therefore, more user data area 51 can be reserved. This allows a use of a recording medium with a smaller diameter and small user data area 51. For recording important information such as disc ID, a recording area may be formed in an outer peripheral region to secure reliability in consideration of data corruption and the like. According to the optical information recording medium 20 of the present invention, an area reserved as the recording area can be small. Thus, recording areas may be provided both in an inner peripheral region and the outer peripheral region.

### [Embodiment 5]

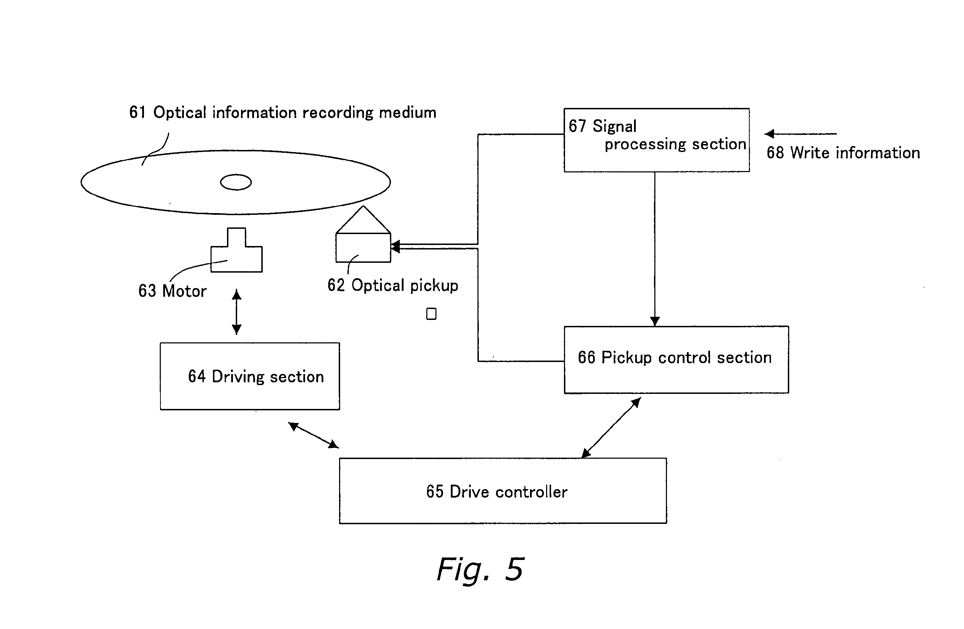

Figure 5 shows a schematic view of a recording and reproduction apparatus for recording information on an optical information recording medium 61 of the present invention. The optical information recording medium 61 may be, for example, a write once medium which does not include an information recording layer as shown in Embodiments 1 and 2. A drive controller 65 controls a driving section 64 and a pickup control section 66, and write information 68 is modified at a signal processing section 67. Then, an optical pickup 62 irradiates laser to perform recording. At this time, for changing the transmittance of the light transmitting layer 23, writing is performed using recording light having a power higher than that in the conventional one. Thus, recording becomes possible. For reproduction, with tracking being performed by the optical pickup 62, a reproduction signal is modulated at the signal processing section 67 to retrieve reproduction information.

### [Embodiment 6]

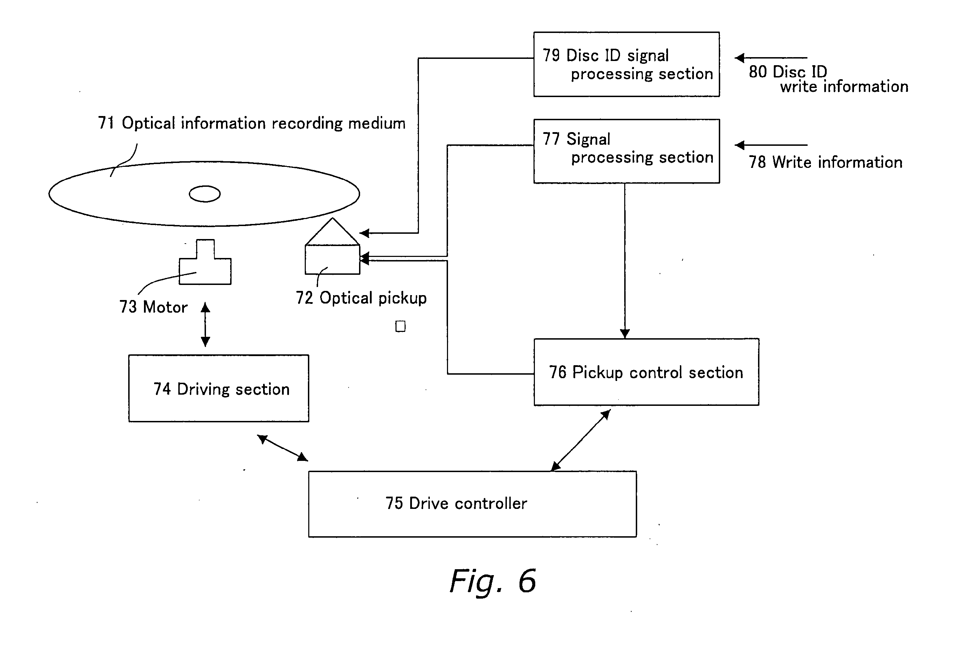

Figure 6 shows a schematic view of a recording and reproduction apparatus for recording a disc ID on an optical information recording medium 71 of the present invention. The optical information recording medium 71 may be, for example, a rewritable medium having an information recording layer as shown in Embodiment 4. Disc ID write information 80 is modulated at an ID signal processing section 79 and stored in the optical information recording medium 71. The signal is processed by the signal processing section 79 intended for ID which is different from a signal processing section 77. A control section which is not shown controls the disc ID signal processing section 79 and the signal processing section 77 for switching the recording mode.

According to the recording and reproduction apparatus of the present invention, when there are a plurality of recording areas for which different recording methods are used as shown in Figure 4, the recording mode can be switched for each area. This contributes to reduction of the cost for producing media.

### [Embodiment 7]

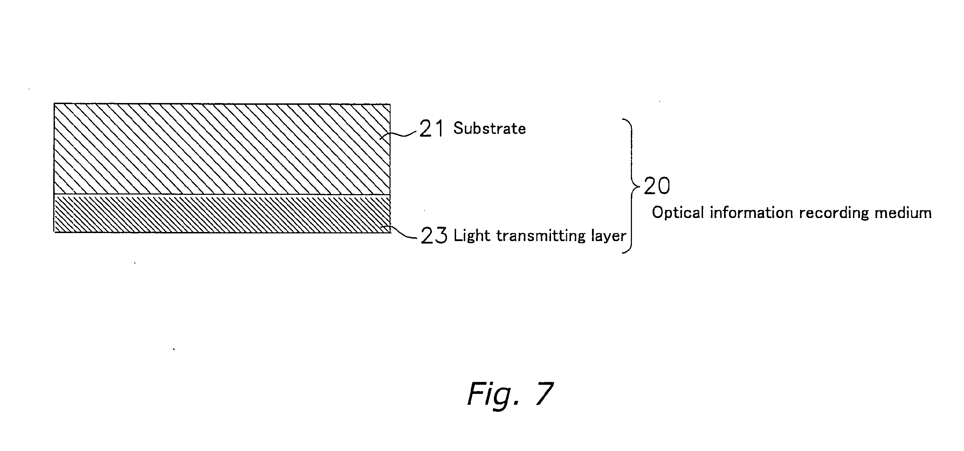

In Figure 7, a structure of an optical information recording medium 20 with the light transmitting layer 23 being formed directly on the substrate 21 is shown. In this embodiment, an absorption layer is omitted. However, advantageous effects of the present invention can be achieved sufficiently.

### [Other embodiments]

Embodiments of the present invention have been described by way of examples. However, the present invention is not limited to the above-described embodiments, and can be applied to other embodiments based on technical idea of the present invention. For example, write once recording can be performed on any of recording and reproduction media, write once media, ROM media, and the like.

### INDUSTRIAL APPLICABILITY

The optical information recording medium, and the recording and reproduction method and the recording and reproduction apparatus for the optical information recording media according to the present invention enable recording and reproduction of information without using an information recording layer. Thus, they are useful for optical information recording media, recording and reproduction methods for optical information recording media, and the like with a low cost and a high density.

## Claims

1. An optical information recording medium comprising a substrate and a light transmitting layer formed on the substrate, wherein:
transmittance of the light transmitting layer is changed upon irradiation of recording light.

2. An optical information recording medium according to claim 1, further comprising a light absorption layer between the substrate and the light transmitting layer.

3. An optical information recording medium according to claim 1 or 2, wherein the change in the transmittance of the light transmitting layer caused by irradiation of recording light is an irreversible change.

4. An optical information recording medium according to any one of claims 1 through 3, wherein the change in the transmittance of the light transmitting layer caused by irradiation of recording light is in a direction to reduce transmission of reproduction light or recording and reproduction light.

5. An optical information recording medium according to any one of claims 1 through 4, wherein the light transmitting layer is formed with a resin sheet being included therein.

6. An optical information recording medium according to claim 5, wherein the resin sheet is formed of a polycarbonate resin, an acryl resin, or a polyolefin resin.

7. An optical information recording medium according to claim 5 or 6, wherein the light transmitting layer further includes an adhesive resin for adhering the resin sheet to the substrate.

8. An optical information recording medium according to claim 7, wherein the adhesive resin is formed with a UV curable resin included therein.

9. An optical information recording medium according to claim 7, wherein the adhesive resin is formed of an acryl gluing agent.

10. An optical information recording medium according to claim 1, wherein the light transmitting layer is formed of one or more layers of a UV curable resin.

11. An optical information recording medium according to claim 1, wherein at least one transmittance-changed area of the light transmitting layer is formed in an area other than a user data area.

12. An optical information recording medium according to claim 11 wherein the transmittance-changed area is formed on an inner side or outer side of the user data area, or both the inner and outer sides.

13. A recording and reproduction method for an optical information recording medium having a substrate and a light transmitting layer formed on the substrate, wherein:
the light transmitting layer is irradiated with modulated recording light from above and transmittance of the light transmitting layer is changed to record information, and information is reproduced based on the change in the transmittance.

14. A recording and reproduction method for an optical information recording medium according to claim 13, wherein the transmittance of the light transmitting layer is changed irreversibly to record information.

15. A recording and reproduction method for an optical information recording medium according to claim 13 or 14, wherein at least one transmittance-changed area of the light transmitting layer is formed in an area other than a user data area.

16. A recording and reproduction apparatus for an optical information recording medium, wherein the light transmitting layer is irradiated with modulated recording light from above and transmittance of the light transmitting layer is changed to record information, and information is reproduced based on the change in the transmittance.

17. A recording and reproduction apparatus for an optical information recording medium having a substrate, a first recording area including an information recording layer, and a second recording area including a light transmitting layer, comprising:
light irradiation unit operable to irradiate the first recording area and the second recording area with recording light; and
switching unit operable to switch a recording mode of the light irradiation unit between the first recording area and the second recording area,
wherein the light transmitting layer is irradiated with modulated recording light from above and transmittance of the light transmitting layer is changed to record information in the second recording area, and information is reproduced based on the change in the transmittance.
